# FASCICULE DE BREVET EUROPEEN

(11) **EP 2 156 340 B1**
(45) Date de publication et mention de la délivrance du brevet: **24.04.2019**
(21) Numéro de dépôt: 08805862.3
(22) Date de dépôt: 27.05.2008
(51) Int. Cl.: G06F 17/30

(54) **PROCEDE ET DISPOSITIF DE COMMUNICATION ENTRE APPLICATIONS WEB DISTINCTES**
VERFAHREN UND VORRICHTUNG FÜR DIE KOMMUNIKATION ZWISCHEN SEPARATEN WEBANWENDUNGEN
METHOD AND DEVICE FOR COMMUNICATION BETWEEN SEPARATE WEB APPLICATIONS

(30) Priorité: 29.05.2007 FR 0755315
(43) Date de publication de la demande: 24.02.2010
(73) Titulaire: Orange, 75015 Paris (FR)
(72) Inventeur: BERTIN, Emmanuel, 14450 Luc-Sur-Mer (FR); VAN DEN BOSSCHE, Julien, 14970 Benouville (FR); DESCHREVEL, Jean-Pierre, 14740 Putot-en-bessin (FR)
(74) Mandataire: Cabinet Beau de Loménie
(86) Numéro de dépôt international: PCT/FR2008/050918
(87) Numéro de publication internationale: WO 2008/152296

(56) Documents cités:
- US-A1- 2007 113 201
- YU J ET AL: "A framework for rapid integration of presentation components" PROCEEDINGS OF THE 16TH INTERNATIONAL CONFERENCE ON WORLD WIDE WEB, [Online] 8 mai 2007 (2007-05-08), - 12 mai 2007 (2007-05-12) pages 923-932, XP002458364 Banff, Alberta, Canada ISBN: 978-1-59593-654-7 Extrait de l'Internet: URL:http://doi.acm.org/10.1145/1242572.124 2697> [extrait le 2007-11-13]
- ZIEBOLD G ET AL: "Asynchronous Rendering of Portlet Content With AJAX Technology" INTERNET CITATION, [Online] 6 juin 2005 (2005-06-06), XP002397762 Extrait de l'Internet: URL:http://developers.sun.com/prodtech/por talserver/reference/techart/asy nch_rendering.html> [extrait le 2006-09-05]

## Description

La présente invention concerne un procédé permettant de faire dialoguer des applications Web distinctes, exécutées chacune depuis un terminal serveur et affichées simultanément dans une même page de présentation, par exemple une page HTML présentée sur un terminal d'ordinateur au moyen d'un navigateur Web.

L'invention permet ainsi à des applications Web distinctes de prendre en compte pour l'exécution de certaines opérations sollicitées par un utilisateur, des informations affichées et/ou mises à disposition par une autre application avec laquelle elles cohabitent au niveau de l'affichage, à l'intérieur d'une même page Web développée d'une façon modulaire à partir d'une pluralité de modules distincts et indépendants plus communément appelés "portlets".

De tels modules ou portlets, aptes à servir de conteneur dans une page Web pour l'exécution et/ou l'affichage d'applications Web, sont notamment utilisés dans des développements de services ou d'applications du type Web 2.0, par exemple en s'appuyant sur les techniques AJAX (pour "Asynchronous JavaScript And XML" - ou " XML et Javascript asynchrones ").

A titre informatif, AJAX désigne une méthode informatique de développement d'applications Web. Il ne s'agit aucunement d'une technologie en elle-même, mais simplement d'un terme qui évoque l'utilisation conjointe d'un ensemble de technologies couramment utilisées sur le web, à savoir notamment :
▪ le langage HTML (pour "HyperText Markup Language"), ou le langage XHTML (pour "Extensible HyperText Markup Language") pour ce qui concerne la définition de la structure sémantique des informations contenues dans une page web ;
▪ le modèle DOM (pour "Document Object Model" en anglais "Modèle objet de document" en français), et JavaScript pour afficher et interagir dynamiquement avec l'information présentée. DOM est une recommandation du W3C qui permet notamment de décrire une interface indépendante de tout langage de programmation et de toute plate-forme et qui permet à des programmes informatiques et à des scripts d'accéder ou de mettre à jour le contenu, la structure ou le style de documents ;
▪ le langage JavaScript (marque déposée), dont l'objet XMLHttpRequest qui caractérise le coté asynchrone d'Ajax, notamment et non exclusivement, pour ce qui concerne l'échange et la manipulation, des données avec un serveur Web. Cet objet permet notamment d'obtenir des données au format XML, mais aussi au format HTML, ou plus simplement encore au format texte, par l'invocation de simples requêtes de type HTTP (pour "Hypertext Transfer Protocol" en anglais, ou "protocole de transfert hypertexte" - protocole de communication client-serveur développé pour le World Wide Web).

Or, si de telles portlets permettent de faire cohabiter plusieurs composants applicatifs au sein d'une même page Web, et ceci de façon personnalisable (en termes de graphisme, d'agencement, etc.), elles présentent cependant pour principal inconvénient de ne pas permettre la connexion et/ou l'interopérabilité entre plusieurs applications Web hébergées chacune par une portlet d'une même page Web, respectivement.

US 2007/0113201 A1 décrit un environnement permettant à des utilisateurs d'accéder à des ressources de collaboration à travers des portlets.

La présente invention offre une solution qui ne présente pas l'inconvénient précité.

L'invention vise à résoudre les inconvénients précités en proposant un procédé qui soit apte au contraire à permettre la communication d'informations entre applications distinctes hébergées dans une même page Web, ainsi qu'une interopérabilité dynamique entre ces applications, basée sur une utilisation d'informations échangées entre ces dernières.

A cet effet, l'invention concerne un procédé de communication entre une première application et au moins une deuxième application disposant respectivement d'une première et deuxième interface de manipulation affichées respectivement dans une première et une deuxième zone d'affichage hébergée chacune dans une même page de présentation, exécutée par un navigateur web, par exemple.

Selon l'invention, un tel procédé comprenant avantageusement :
▪ une étape de transfert d'au moins une information, dite information transférée, affichée par ladite première interface de manipulation associée à ladite première application, vers ladite deuxième interface (par exemple vers un champ d'une interface homme-machine) de manipulation ;
▪ une étape d'exécution dynamique, par ladite deuxième application, d'au moins une opération tenant compte d'une valeur d'au moins un paramètre associé à ladite information transférée.

La présentation du résultat de ladite opération réalisée par la deuxième application pourra s'effectuer au moyen de ladite deuxième interface de manipulation, ou bien au moyen de tout autre type de moyen d'affichage, localement ou bien d'une façon déportée.

Un tel procédé selon l'invention permet donc à une deuxième application hébergée dans une page Web de recevoir une information affichée dans cette même page Web, par une première application, soit pour l'utiliser directement dans l'exécution d'une opération particulière sollicitée par un utilisateur, soit pour récupérer à partir de cette information transférée une valeur d'au moins un paramètre associé à cette dernière, dans l'objectif de l'exécution dynamique et de l'affichage du résultat de ladite opération particulière.

Un tel procédé permet donc avantageusement de favoriser l'interopérabilité dynamique et la communication/ l'échange d'informations entre applications Web hébergées respectivement dans une même page Web, par exemple une page HTML et ainsi, d'améliorer la performance du service offert à l'usager.

Préférentiellement, ladite étape de transfert est une opération du type "glisser-déposer" de ladite information affichée entre ladite première et ladite deuxième interface de manipulation, ce qui tend à favoriser et à simplifier l'ergonomie des services proposés aux utilisateurs, ainsi que l'interopérabilité entre applications Web partageant une même page Web, les échanges et la communication d'informations entre ces dernières s'avérant à la fois simple et intuitif.

Dans un mode de réalisation particulier de l'invention, la valeur dudit au moins un paramètre est transmise par ladite première application à ladite deuxième application, au moment de l'exécution de ladite étape de transfert. Le transfert d'informations entre applications Web hébergées dans une même page Web s'effectue alors directement entre ces dernières.

Dans un mode de réalisation préféré de l'invention, le procédé comprend avantageusement entre ladite étape de transfert et ladite étape d'exécution dynamique, une étape de récupération par ladite deuxième application auprès de ladite première application, de ladite valeur d'au moins un paramètre associé à ladite information transférée.

Une telle approche permet de ne plus avoir à transmettre un contenu complet entre applications, mais simplement une référence pointant vers un contenu associé à l'information transférée, ce qui offre pour avantage de ne pas avoir à surcharger le code de la page Web hébergeant les applications Web entre lesquels l'information est échangée et donc de ne pas altérer la qualité du service rendu aux utilisateurs.

D'une façon avantageuse, ladite étape de récupération comprend les sous-étapes suivantes :
▪ émission par une deuxième interface de communication associée à ladite deuxième application, à destination d'une première interface de communication associée à ladite première application, d'une requête de récupération de ladite valeur dudit au moins un paramètre, ladite requête contenant au moins une référence de ladite information transférée associée à une adresse d'un terminal serveur exécutant ladite première application ;
▪ récupération par ladite première interface de communication de ladite valeur auprès de ladite première application ;
▪ transmission par ladite première interface de communication à ladite deuxième interface de communication d'un message contenant ladite valeur dudit au moins un paramètre ;
▪ transmission de ladite valeur à ladite deuxième application, par ladite deuxième interface de communication, en tant que paramètre d'entrée de ladite opération.

Préférentiellement, ladite étape d'émission est précédée d'une étape de contrôle par ladite deuxième interface que le type dudit au moins un paramètre est compatible avec le type des paramètres d'entrée de ladite opération.

Un tel contrôle offre pour avantage qu'une opération faisant suite à un transfert d'au moins une information entre les première et deuxième applications ne sera exécutée que si le type de l'information transférée est compatible avec les paramètres d'entrée de ladite opération, ceci permettant également de ne pas solliciter de ressources matérielles et/ou logicielles inutilement et donc, de favoriser encore la qualité du service offert aux utilisateurs.

Avantageusement, ledit message est conforme à un format adapté pour permettre une communication d'informations entre lesdites première et deuxième applications.

Ceci permet d'assurer la communication d'informations entre applications Web hébergées dans une même page de présentation affichée par un navigateur, en particulier entre des applications distinctes et développées d'une manière parfaitement indépendante.

L'invention concerne également un dispositif de communication entre une première application et au moins une deuxième application disposant respectivement d'une première et deuxième interface de manipulation affichées respectivement dans une première et une deuxième zone d'affichage hébergée chacune dans une même page de présentation, par exemple exécutée par un navigateur Web, ledit dispositif comprenant :
▪ des moyens de transfert d'au moins une information, dite information transféré, affichée par ladite première interface de manipulation associée à ladite première application, vers ladite deuxième interface de manipulation ;
▪ des moyens d'exécution, par ladite deuxième application, d'au moins une opération tenant compte d'une valeur d'au moins un paramètre associé à ladite information transférée.

Un tel dispositif pourra aisément être complété de moyens de présentation du résultat de ladite opération, soit communs à ladite deuxième interface de manipulation, soit déportés pour un affichage dans une autre zone d'affichage le cas échéant.

Préférentiellement, le dispositif selon l'invention, comprend des moyens de récupération par ladite deuxième application auprès de ladite première application, de ladite valeur d'au moins un paramètre associée à ladite information transférée, lesdits moyens de récupération étant adaptés pour recevoir en entrée ladite information transférée et pour fournir en sortie, aux dits moyens d'exécution dynamique, ladite valeur dudit au moins un paramètre.

Avantageusement, lesdits moyens de récupération comportent :
▪ des moyens d'émission par une deuxième interface de communication associée à ladite deuxième application, à destination d'une première interface de communication associée à ladite première application, d'une requête de récupération de ladite valeur dudit au moins un paramètre, ladite requête contenant au moins une référence (tirée dudit au moins un paramètre) de ladite information transférée associée à une adresse d'un terminal serveur exécutant ladite première application ;
▪ des moyens de récupération de ladite valeur par ladite première interface de communication auprès de ladite première application ;
▪ des moyens de transmission par ladite première interface de communication à ladite deuxième interface de communication d'un message contenant la valeur dudit au moins un paramètre, ledit message étant conforme à un format (et une sémantique) adapté pour permettre une communication d'informations entre lesdites première et deuxième applications ;
▪ des moyens de transmission de ladite valeur à ladite deuxième application, par ladite deuxième interface de communication, en tant que paramètre d'entrée de ladite opération.

L'invention concerne encore un produit programme d'ordinateur téléchargeable depuis un réseau de communication et/ou stocké sur un support d'information lisible par ordinateur et/ou exécutable par un microprocesseur, caractérisé en ce qu'il comprend des instructions de code pour l'exécution d'un procédé de communication conforme au procédé précité, lorsqu'il est exécuté sur un ordinateur.

L'invention fournit donc un mécanisme simple et efficace pour permettre à un utilisateur d'utiliser des informations produites par une première application Web et affichées dans une première portlet d'une page Web, pour exécuter une opération spécifique d'une deuxième application Web, dont le résultat sera affiché à l'intérieur d'une deuxième portlet hébergée dans la même page Web que la première portlet. Un tel mécanisme pourra s'appuyer notamment et non exclusivement, sur une action de l'utilisateur du type "glisser-déposer" d'un élément ("drag and drop") entre deux portlets hébergées au sein d'une même page HTML.

A titre de simple exemple illustratif et non limitatif de ce qui précède, on peut imaginer qu'une même page Web puisse offrir à l'affichage une première application de messagerie électronique mettant à disposition de l'utilisateur un annuaire de personnes auxquelles il est susceptible d'envoyer un email, ainsi qu'une deuxième application de cartographie permettant par exemple d'afficher un plan ou un itinéraire d'accès à une adresse physique, à partir d'un nom de personne saisie au moyen d'une interface utilisateur. Ces deux applications sont cependant distinctes tant sur le plan de leur développement que du point de vue de leurs fonctionnalités. Dans cet exemple, il s'agit de permettre à un utilisateur, au moyen de la présente invention, de pouvoir effectuer une action de type "glisser-déposer", par exemple appliquée à une information du type adresse email d'une personne affichée à l'écran et contenue dans un annuaire de personnes associé à la première application, vers une zone de saisie de l'interface utilisateur de la deuxième application, pour que cette dernière puisse effectuer dynamiquement des opérations pour afficher à l'écran le plan ou l'itinéraire permettant de visualiser l'adresse physique de la personne dont l'adresse email a été sélectionnée dans l'annuaire de la première application.

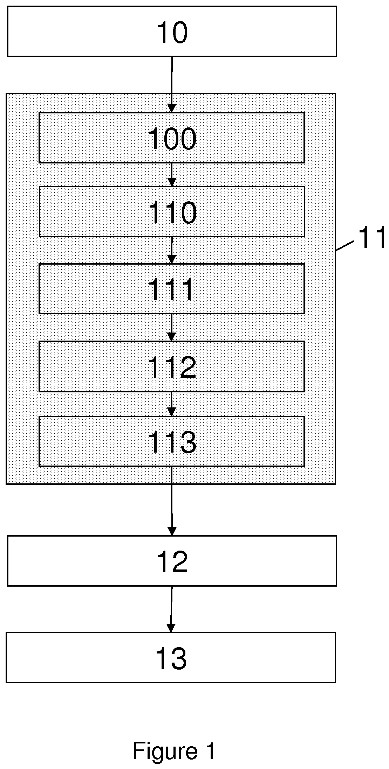

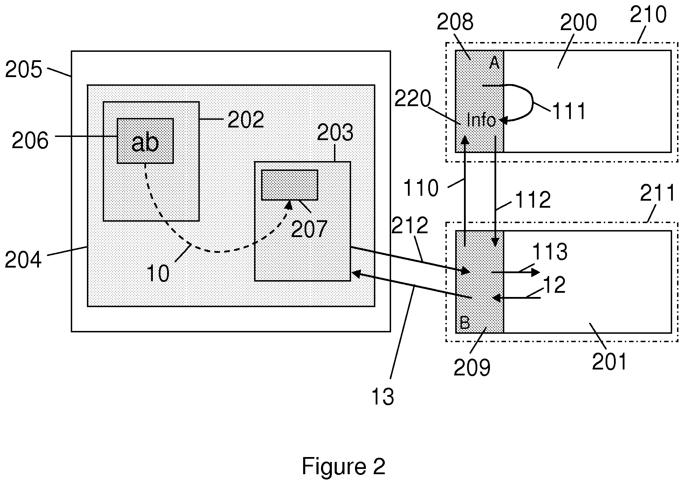

Les caractéristiques et avantages techniques de la présente invention ressortiront mieux de la description suivante, faite à titre indicatif et non limitatif, au regard des dessins annexés sur lesquels :
▪ la figure 1 est ordinogramme des grandes étapes du procédé selon l'invention ;
▪ la figure 2 offre une vue dynamique de l'enchainement des échanges et des communications entre les différents moyens du dispositif selon l'invention.

La présente invention propose une solution favorisant la communication et l'échange d'information, et donc l'interopérabilité dynamique entre applications Web, sans plus de nécessité de transmettre l'ensemble du contenu communiqué ou échangé.

Ainsi et comme illustré sur les figures 1 et 2, l'invention repose sur un procédé de communication entre une première application 200 et au moins une deuxième application 201 disposant respectivement d'une première et deuxième interface de manipulation affichées respectivement dans une première et une deuxième zone d'affichage 202 et 203 (une portlet, selon un mode de réalisation préféré de l'invention) contenues chacune dans une même page 204 de présentation exécutée par un navigateur 205 Web.

Un tel procédé comprenant les étapes suivantes :
▪ une étape 10 de transfert d'au moins une information 206 affichée par ladite première interface de manipulation associée à ladite première application 200, vers au moins une zone 207 de ladite deuxième interface associée à ladite deuxième application 201. Suite à cette première étape, la deuxième interface 203 (ou portlet) transmet 212 au connecteur 209 une requête contenant une information représentative d'au moins un paramètre dont une valeur devra être requise à l'étape suivante 12 ;
▪ une étape 12 d'exécution dynamique, par ladite deuxième application 201, d'au moins une opération tenant compte d'une valeur 220 d'au moins un paramètre associé à ladite information 206 transférée ;
▪ une étape 13 de présentation du résultat de ladite opération au moyen de ladite deuxième interface de manipulation.

Dans un mode de réalisation particulier de l'invention, la valeur 220 dudit au moins un paramètre est transmise par ladite première application 200 à ladite deuxième application 201, au moment de l'exécution de ladite étape 10 de transfert.

Ainsi, le contenu de la page HTML envoyé au navigateur contient directement des balises décrivant la sémantique des informations transmises, lesquelles s'appuient par exemple sur des micro-formats du Web 2.0.

Une portion de la page HTML (incluant ces balises) peut être alors directement transférée lors d'une opération du type "glisser-déposer", entre la portlet 202 associée à la première application 200 et celle 203 associée à la deuxième application 201.

Dans un tel premier mode de réalisation possible de l'invention consiste ainsi à faire partager par différentes portlets hébergées dans une même page Web une sémantique commune, insérée sous forme de balise dans un document XML (pour "eXtensible Markup Language" en anglais). Tous les contenus susceptibles d'être glissés/déplacés seront alors décrits à l'avance dans le document XML, selon cette sémantique commune, ce qui permet une interprétation correcte de la nature de l'élément par la portlet recevant cet élément.

Cette sémantique commune pourra être définie de plusieurs façons.

Une première façon pourra consister en l'utilisation d'un mécanisme du type micro-format consistant à enrichir le contenu d'un code HTML en y ajoutant des attributs standardisés décrivant le type de ce contenu dans des balises HTML.

A titre de simple exemple illustratif et non limitatif, <div class="vevent"> <span class="summary">Ma Conference</span> </div> indique que "Ma Conférence" est le résumé d'un événement de calendrier. Ces attributs sont standardisés (ou du moins partagés au sein d'une communauté de développeurs) pour plusieurs type de contenu (par exemple les événements d'un calendrier, les cartes de visite, les réseaux d'amis...).

Une deuxième façon pourra consister à s'appuyer sur des mécanismes du Web sémantique, définis notamment au sein du consortium W3C, lesquels permettent également de spécifier la sémantique complète d'un contenu en décrivant ce contenu sous forme d'un modèle de données spécifiant les relations internes et externes de ce contenu par des propriétés prédéfinies.

Dans un mode de réalisation préféré de l'invention, le procédé de communication comprend entre ladite étape 10 de transfert et ladite étape 12 d'exécution dynamique, une étape 11 de récupération par ladite deuxième application 201 auprès de ladite première application 200, de ladite valeur 220 d'au moins un paramètre associé à ladite information 206 transférée.

Cette étape 11 de récupération comprend notamment les sous-étapes suivantes :
▪ émission 110 par ledit deuxième connecteur 209, lequel forme l'interface de communication associée à ladite deuxième application 201, à destination dudit premier connecteur 208, lequel forme l'interface de communication associée à ladite première application 200, d'une requête 210 de récupération de ladite valeur 220 dudit au moins un paramètre, ladite requête contenant au moins une référence contenue dans ladite information 206 transférée associée à une adresse d'un terminal 210 serveur exécutant ladite première application 200 ;
▪ récupération 111 par le connecteur 208 de ladite valeur 220 auprès de ladite première application 200 ;
▪ transmission 112 par le premier connecteur 208 au deuxième connecteur 209 d'un message formaté contenant la valeur 220 dudit au moins un paramètre;
▪ transmission 113 de ladite valeur 220 à la deuxième application 201, par le deuxième connecteur 209, ladite valeur formant paramètre d'entrée de ladite opération.

Ainsi et tel que décrit ci-dessus, la portlet 202 de départ ne transmet plus le contenu de l'élément 206 à la portlet 203 d'arrivée, mais uniquement une référence véhiculée par un attribut d'une balise HTML.

Cette référence est une URI (de l'anglais "Uniform Resource Identifier", soit littéralement "identifiant uniforme de ressource"), c'est-à-dire une courte chaîne de caractères identifiant une ressource Web physique ou abstraite accessible auprès d'une application et/ou d'un serveur Web, et dont la syntaxe respecte une norme d'Internet. Cette URI identifie de façon non ambiguë l'application 200 présentée par la portlet 202 de départ, ainsi qu'une référence caractérisant l'élément 206 provenant de cette dernière qui a été "glissé-déposé" vers la portlet 203 d'arrivée.

Le connecteur 209 lié à la portlet 203 d'arrivée effectue alors un appel à cette URI et accède à une page générée par l'application 200 associée à la portlet 202 de départ (étapes 110, 111 et 112).

Cette page décrit exhaustivement l'élément glissé/déplacé selon une sémantique dite pivot.

Cette sémantique pivot peut être décrite en utilisant les mécanismes décrits ci-dessus (par exemple les micro-formats). Elle doit être partagée entre le connecteur 208 de départ et les connecteurs 209 de destination potentielle, mais elle reste externe au code HTML de la portlet.

Cette sémantique pivot ne correspond pas nécessairement à la sémantique interne de l'application, mais il peut y avoir une traduction entre la sémantique interne de l'application et cette sémantique pivot, ce qui permet alors une parfaite indépendance entre les deux et constitue ainsi l'un des principaux avantages de l'invention proposée.

Ce mécanisme permet également de prendre en compte une différentiation de l'élément déplacé en fonction des droits de l'application qui invoque cette page et de l'utilisateur ayant réalisé l'action de glissé/déplacé. Par exemple, le résultat de l'action peut être différent pour un administrateur ou pour un utilisateur.

Contrairement aux solutions actuelles, le mécanisme proposé par l'invention autorise également la gestion d'un contrôle d'accès entre portlets, pour vérifier qu'une portlet de départ dispose bien du droit de fournir des informations à une autre portlet avec laquelle elle cohabite dans une page Web.

La solution technique proposée, laquelle s'appuie sur le passage de simples références aux informations échangées entre les applications Web, offre encore les avantages suivants, comparativement aux solutions existantes de l'art antérieur:
▪ l'information est transmise directement entre connecteurs, ce qui permet d'une part, d'éviter de transmettre des données que l'utilisateur n'a pas à connaitre forcément (par exemple des identifiants techniques) et, d'autre part, de rendre le procédé transparent pour l'utilisateur ;
▪ un contrôle d'accès et des informations pouvant être échangées peut être mis en place de façon relativement simple ;
▪ une différenciation de la présentation des résultats d'une opération tenant compte d'une information reçue d'une autre portlet peut être mise en place également ;
▪ les portlets restent indépendantes les unes des autres et peuvent être modifiées indépendamment, ce qui favorise l'aspect générique du procédé et dispositif selon l'invention.

Dans un mode de réalisation étendu du procédé de communication selon l'invention, la référence aux informations échangées selon une opération du type "glisser-déposer" peut être avantageusement complétée d'une description sémantique des ressources et des opérations qui doivent être déclenchée en tenant compte de ces informations.

Une telle description sémantique contiendrait alors une liste de toutes les portlets et, pour chacune de ces portlets, au moins les informations suivantes :
▪ toutes les ressources (i.e. les informations signifiantes pour l'utilisateur) générées par cette portlet (par exemple une ressource du type "numéro de téléphone" contenue dans une ressource de type "carte de visite") ;
▪ les opérations réalisables par cette portlet et les ressources nécessaires à cette portlet pour réaliser cette opération (par exemple une opération consistant à établir une communication téléphonique à partir d'une ressource de type "numéro de téléphone").

Une telle variante possible du procédé de communication selon l'invention permet avantageusement de déterminer à l'avance l'ensemble des portlets actionnables par une ressource d'un type prédéterminé, et donc de pouvoir informer l'utilisateur de toutes les opérations qu'il pourra réaliser à partir d'une ressource telle ressource prédéterminée.

Une telle variante favorise ainsi:
▪ des interactions plus intuitives pour l'utilisateur entre les portlets (et lui semblant intelligentes) ;
▪ la possibilité de faire varier les actions possibles en fonction du contexte de l'utilisateur (au bureau, en mobilité, en train de travailler sur telle portlet) et du contexte des portlets.

## Revendications

1. Procédé de communication entre une première application web (200) et au moins une deuxième application web (201) disposant respectivement d'une première et deuxième interface de manipulation affichées respectivement dans une première (202) et une deuxième (203) zone d'affichage hébergée chacune dans une même page web (204) exécutée par un navigateur web (205), ledit procédé comprenant :
▪ une étape (10) de transfert d'au moins une information (206), dite information transférée, produite par ladite première application et affichée par ladite première interface de manipulation, vers ladite deuxième interface de manipulation ;
▪ une étape (12) d'exécution par ladite deuxième application (201), d'au moins une opération tenant compte d'une valeur (220) d'au moins un paramètre associé à ladite information (206) transférée ;
ledit procédé comprenant en outre entre ladite étape (10) de transfert et ladite étape (12) d'exécution dynamique, une étape (11) de récupération par ladite deuxième application (201) auprès de ladite première application (200), de ladite valeur (220) d'au moins un paramètre associé à ladite information (206) transférée, ladite étape de récupération comprenant les sous-étapes suivantes :
▪ émission (110) par une deuxième interface (209) de communication associée à ladite deuxième application (201), à destination d'une première interface (208) de communication associée à ladite première application (200), d'une requête (210) de récupération de ladite valeur (220) dudit au moins un paramètre, ladite requête (210) contenant au moins une référence de ladite information (206) transférée associée à une adresse d'un terminal serveur exécutant ladite première application (200) ;
▪ récupération (111) par ladite première interface (208) de communication de ladite valeur (207) auprès de ladite première application (200) ;
▪ transmission (112) par ladite première interface (208) de communication à ladite deuxième interface (209) de communication d'un message contenant ladite valeur (220) dudit au moins un paramètre ;
▪ transmission (113) de ladite valeur (220) à ladite deuxième application (201), par ladite deuxième interface (209) de communication, en tant que paramètre d'entrée de ladite opération.

2. Procédé selon la revendication 1, **caractérisé en ce que** ladite étape (10) de transfert est une opération du type "glisser-déposer" de ladite information (206) affichée, entre ladite première et ladite deuxième interface de manipulation.

3. Procédé selon la revendication 1 ou 2 **caractérisé en ce que** ladite étape d'émission (110) est précédée d'une étape (100) de contrôle par ladite deuxième interface de communication (209) que le type dudit au moins un paramètre est compatible avec le type des paramètres d'entrée de ladite opération.

4. Procédé selon l'une quelconque des revendications 1 à 3, **caractérisé en ce que** ledit message est conforme à un format adapté pour permettre une communication d'informations entre lesdites première et deuxième applications (200) (201).

5. Dispositif de communication entre une première application web (200) et au moins une deuxième application web (201) disposant respectivement d'une première et deuxième interface de manipulation affichées respectivement dans une première (202) et une deuxième (203) zone d'affichage hébergée chacune dans une même page web (204) exécutée par un navigateur (205) web, ledit dispositif comprenant :
▪ des moyens de transfert d'au moins une information (206), dite information transférée, produite par ladite première application (200) et affichée par ladite première interface de manipulation, vers ladite deuxième interface de manipulation ;
▪ des moyens d'exécution, par ladite deuxième application (201), d'au moins une opération tenant compte d'une valeur (220) d'au moins un paramètre associé à ladite information (206) transférée ;
▪ des moyens de présentation du résultat de ladite opération réalisée par ladite deuxième interface de manipulation ;
ledit dispositif comprenant en outre des moyens de récupération par ladite deuxième application (201) auprès de ladite première application 200), de ladite valeur (220) d'au moins un paramètre associée à ladite information (206) transférée, lesdits moyens de récupération étant adaptés pour recevoir en entrée ladite information (206) transférée et pour fournir en sortie, aux dits moyens d'exécution dynamique, ladite valeur (220) dudit au moins un paramètre, lesdits moyens de récupération comportant ::
▪ des moyens d'émission par une deuxième interface (209) de communication associée à ladite deuxième application (201), à destination d'une première interface (208) de communication associée à ladite première application, d'une requête (210) de récupération de ladite valeur (220) dudit au moins un paramètre, ladite requête (210) contenant au moins une référence de ladite information (206) transférée associée à une adresse d'un terminal serveur exécutant ladite première application (200) ;
▪ des moyens de récupération de ladite valeur (220) par ladite première interface (208) de communication auprès de ladite première application (200) ;
▪ des moyens de transmission par ladite première interface (208) de communication à ladite deuxième interface (209) de communication d'un message contenant la valeur (220) dudit au moins un paramètre, ledit message étant conforme à un format adapté pour permettre une communication d'informations entre lesdites première et deuxième applications (200) (201) ;
▪ des moyens de transmission de ladite valeur (220) à ladite deuxième application (201), par ladite deuxième interface (209) de communication, en tant que paramètre d'entrée de ladite opération.

6. Produit programme d'ordinateur téléchargeable depuis un réseau de communication et/ou stocké sur un support d'information lisible par ordinateur et/ou exécutable par un microprocesseur, **caractérisé en ce qu'**il comprend des instructions de code pour l'exécution d'un procédé de communication conforme à l'une quelconque des revendications 1 à 4, lorsqu'il est exécuté sur un ordinateur.

## Patentansprüche

1. Kommunikationsverfahren zwischen einer ersten Webanwendung (200) und mindestens einer zweiten Webanwendung (201), die über eine erste bzw. eine zweite Bedienungsschnittstelle verfügen, die in einer ersten (202) bzw. zweiten (203) Anzeigezone angezeigt werden, die jeweils auf einer selben Webseite (204), die von einem Webnavigator (205) ausgeführt wird, vorhanden sind, wobei das Verfahren umfasst:
* einen Schritt (10) der Weiterleitung mindestens einer Information (206), weitergeleitete Information genannt, die von der ersten Anwendung erzeugt und von der ersten Bedienungsschnittstelle angezeigt wird, zu der zweiten Bedienungsschnittstelle;
* einen Schritt (12) der Ausführung mindestens eines Vorgangs durch die zweite Schnittstelle (201), der einen Wert (220) mindestens eines der weitergeleiteten Information (206) zugeordneten Parameters berücksichtigt;
wobei das Verfahren ferner zwischen dem Weiterleitungsschritt (10) und dem dynamischen Ausführungsschritt (12) einen Schritt (11) der Wiedergewinnung, durch die zweite Anwendung (201) bei der ersten Anwendung (200), des Werts (220) mindestens eines der weitergeleiteten Information (206) zugeordneten Parameters umfasst, wobei der Wiedergewinnungsschritt die folgenden Unterschritte umfasst:
* durch die zweite Kommunikationsschnittstelle (209), die der zweiten Anwendung (201) zugeordnet ist, Senden (110) in Richtung einer ersten Kommunikationsschnittstelle (208), die der ersten Anwendung (200) zugeordnet ist, einer Wiedergewinnungsanfrage (210) des Werts (220) des mindestens einen Parameters, wobei die Anfrage (210) mindestens eine Referenz der weitergeleiteten Information (206) enthält, die einer Adresse eines Serverendgeräts, das die erste Anwendung (200) ausführt, zugeordnet ist;
* durch die erste Kommunikationsschnittstelle (208) Wiedergewinnung (111) des Werts (207) bei der ersten Anwendung (200);
* durch die erste Kommunikationsschnittstelle (208) Übertragung (112) einer Nachricht, die den Wert (220) des mindestens einen Parameters enthält, an die zweite Kommunikationsschnittstelle (209);
* durch die zweite Kommunikationsschnittstelle (209) Übertragung (113) des Werts (220) an die zweite Anwendung (201) als Eingangsparameter des Vorgangs.

2. Verfahren nach Anspruch 1, **dadurch gekennzeichnet, dass** der Weiterleitungsschritt (10) ein Vorgang des Typs "Drag and Drop" der angezeigten Information (206) zwischen der ersten und der zweiten Bedienungsschnittstelle ist.

3. Verfahren nach Anspruch 1 oder 2, **dadurch gekennzeichnet, dass** dem Sendeschritt (110) ein Kontrollschritt (100) durch die Kommunikationsschnittstelle (209), ob der Typ des mindestens einen Parameters mit dem Typ der Eingangsparameter des Vorgangs kompatibel ist, vorangestellt ist.

4. Verfahren nach einem der Ansprüche 1 bis 3, **dadurch gekennzeichnet, dass** die Nachricht mit einem Format konform ist, das dazu vorgesehen ist, eine Kommunikation von Informationen zwischen den ersten und zweiten Anwendungen (200) (201) zu ermöglichen.

5. Kommunikationsvorrichtung zwischen einer ersten Webanwendung (200) und mindestens einer zweiten Webanwendung (201), die über eine erste bzw. eine zweite Bedienungsschnittstelle verfügen, die in einer ersten (202) bzw. zweiten (203) Anzeigezone angezeigt werden, die jeweils auf einer selben Webseite (204), die von einem Webnavigator (205) ausgeführt wird, vorhanden sind, wobei die Vorrichtung umfasst:
* Mittel zur Weiterleitung mindestens einer Information (206), weitergeleitete Information genannt, die von der ersten Anwendung (200) erzeugt und von der ersten Bedienungsschnittstelle angezeigt wird, zu der zweiten Bedienungsschnittstelle;
* Mittel zur Ausführung mindestens eines Vorgangs durch die zweite Schnittstelle (201), der einen Wert (220) mindestens eines der weitergeleiteten Information (206) zugeordneten Parameters berücksichtigt;
* Mittel zur Darstellung des Resultats des durchgeführten Vorgangs durch die zweite Bedienungsschnittstelle;
wobei die Vorrichtung ferner Mittel zur Wiedergewinnung, durch die zweite Anwendung (201) bei der ersten Anwendung (200), des Werts (220) mindestens eines der weitergeleiteten Information (206) zugeordneten Parameters umfasst, wobei die Wiedergewinnungsmittel dazu vorgesehen sind, am Eingang die weitergeleitete Information (206) zu empfangen und am Ausgang an die dynamischen Ausführungsmittel den Wert (220) des mindestens einen Parameters zu liefern, wobei die Wiedergewinnungsmittel umfassen:
* Mittel zum Senden, durch die zweite Kommunikationsschnittstelle (209), die der zweiten Anwendung (201) zugeordnet ist, in Richtung einer ersten Kommunikationsschnittstelle (208), die der ersten Anwendung zugeordnet ist, einer Wiedergewinnungsanfrage (210) des Werts (220) des mindestens einen Parameters, wobei die Anfrage (210) mindestens eine Referenz der weitergeleiteten Information (206) enthält, die einer Adresse eines Serverendgeräts, das die erste Anwendung (200) ausführt, zugeordnet ist;
* Mittel zur Wiedergewinnung, durch die erste Kommunikationsschnittstelle (208), des Werts (220) bei der ersten Anwendung (200);
* Mittel zur Übertragung, durch die erste Kommunikationsschnittstelle (208) an die zweite Kommunikationsschnittstelle (209), einer Nachricht, die den Wert (220) des mindestens einen Parameters enthält, wobei die Nachricht mit einem Format konform ist, das dazu vorgesehen ist, eine Kommunikation von Informationen zwischen den ersten und zweiten Anwendungen (200) (201) zu ermöglichen;
* Mittel zur Übertragung, durch die zweite Kommunikationsschnittstelle (209) des Werts (220) an die zweite Anwendung (201) als Eingangsparameter des Vorgangs.

6. Computerprogramm, das von einem Kommunikationsnetzwerk herunterladbar und/oder auf einem von einem Computer lesbaren Informationsträger gespeichert und/oder von einem Mikroprozessor ausführbar ist, **dadurch gekennzeichnet, dass** es Codeanweisungen für die Ausführung eines Kommunikationsverfahrens nach einem der Ansprüche 1 bis 4 umfasst, wenn es auf einem Computer ausgeführt wird.

## Claims

1. Method for communication between a first web application (200) and at least one second web application (201) respectively having a first and second manipulation interface that are respectively displayed in a first (202) and a second (203) display area each hosted in one and the same web page (204) executed by a web browser (205), said method comprising:
▪ a step (10) of transferring at least one item of information (206), called transferred item of information, produced by said first application and displayed by said first manipulation interface, to said second manipulation interface;
▪ a step (12) of execution, by said second application (201), of at least one operation taking into account a value (220) of at least one parameter associated with said transferred item of information (206);
said method furthermore comprising, between said transfer step (10) and said dynamic execution step (12), a step (11) of recovery, by said second application (201) from said first application (200), of said value (220) of at least one parameter associated with said transferred item of information (206), said recovery step comprising the following sub-steps:
▪ transmitting (110), by a second communication interface (209) associated with said second application (201), to a first communication interface (208) associated with said first application (200), of a request (210) to recover said value (220) of said at least one parameter, said request (210) containing at least one reference to said transferred item of information (206) associated with an address of a server terminal executing said first application (200);
▪ recovery (111), by said first communication interface (208), of said value (207) from said first application (200);
▪ transmission (112), by said first communication interface (208) to said second communication interface (209), of a message containing said value (220) of said at least one parameter;
▪ transmission (113) of said value (220) to said second application (201), by said second communication interface (209), as input parameter for said operation.

2. Method according to Claim 1, **characterized in that** said transfer step (10) is a "drag-and-drop" operation on said displayed item of information (206) between said first and said second manipulation interface.

3. Method according to Claim 1 or 2, **characterized in that** said transmitting step (110) is preceded by a step (100) of checking, by said second communication interface (209), that the type of said at least one parameter is compatible with the type of the input parameters for said operation.

4. Method according to any one of Claims 1 to 3, **characterized in that** said message is in accordance with a format designed to allow communication of information between said first and second applications (200) (201).

5. Device for communication between a first web application (200) and at least one second web application (201) respectively having a first and second manipulation interface that are respectively displayed in a first (202) and a second (203) display area each hosted in one and the same web page (204) executed by a web browser (205), said device comprising:
▪ means for transferring at least one item of information (206), called transferred item of information, produced by said first application (200) and displayed by said first manipulation interface, to said second manipulation interface;
▪ means for the execution, by said second application (201), of at least one operation taking into account a value (220) of at least one parameter associated with said transferred item of information (206);
▪ means for presenting the result of said operation performed by said second manipulation interface;
said device furthermore comprising means for the recovery, by said second application (201) from said first application (200), of said value (220) of at least one parameter associated with said transferred item of information (206), said recovery means being designed to receive, at input, said transferred item of information (206) and to provide, at output, to said dynamic execution means, said value (220) of said at least one parameter, said recovery means including:
▪ means for the transmitting, by a second communication interface (209) associated with said second application (201), to a first communication interface (208) associated with said first application, of a request (210) to recover said value (220) of said at least one parameter, said request (210) containing at least one reference to said transferred item of information (206) associated with an address of a server terminal executing said first application (200);
▪ means for the recovery of said value (220) by said first communication interface (208) from said first application (200);
▪ means for the transmission, by said first communication interface (208) to said second communication interface (209), of a message containing the value (220) of said at least one parameter, said message being in accordance with a format designed to allow communication of information between said first and second applications (200) (201);
▪ means for the transmission of said value (220) to said second application (201), by said second communication interface (209), as input parameter for said operation.

6. Computer program product downloadable from a communication network and/or stored on a computer-readable information medium and/or able to be executed by a microprocessor, **characterized in that** it comprises code instructions for executing a communication method according to any one of Claims 1 to 4 when it is executed on a computer.
